(19) Europäisches Patentamt
European Patent Office
Office européen des brevets

(11) **EP 4 170 284 A1**

(12) **EUROPEAN PATENT APPLICATION**

(43) Date of publication:
**26.04.2023  Bulletin 2023/17**

(21) Application number: **21204218.8**

(22) Date of filing: **22.10.2021**

(51) International Patent Classification (IPC):
***G01C 21/26*** (2006.01)

(52) Cooperative Patent Classification (CPC):
**G01C 21/26**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Services Poland S.A.
30-399 Kraków (PL)**

(72) Inventors:
• **BANACH, Marzena
62-040 Puszczykowo (PL)**
• **DLUGOSZ, Rafal
62-030 Lubon (PL)**
• **BOGACKI, Piotr
30-069 Krakow (PL)**

(74) Representative: **Hoffmann Eitle
Patent- und Rechtsanwälte PartmbB
Arabellastraße 30
81925 München (DE)**

(54) **METHODS AND DEVICES FOR DETERMINING A POSITION OF A VEHICLE WITHIN A V2I INFRASTRUCTURE**

(57)    Provided is a method performed by an onboard unit of a vehicle, the method comprising: for each of a plurality of vehicle positions on a road, determining a direct distance between the vehicle position and a position of a roadside unit; and determining, based on the determined direct distance, a planar distance between the vehicle position in a horizontal plane containing the vehicle position and a projection of a position of the roadside unit onto a plane of the road, the determining of the planar distance being based on a height of the roadside unit relative to a ground level of the road.

Fig. 4

**Description**

[Technical Field]

Example aspects herein generally relate to determining an accurate position of a vehicle on the road based on determined distances to roadside units of the V2I infrastructure.

More specifically, example aspects herein relate to method and devices to determine a planar distance of a vehicle from a projected mounting position of a roadside on the ground level of a road and using this accurate position of the vehicle in creating virtual tracks for the vehicle.

[Background]

Autonomous driving functionality and, more generally, advanced driver-assistance system (ADAS) functionality are features of modern vehicles which have been attracting increasing interest. ADAS functionality may assist a driver in controlling a vehicle by assisting with driving, parking and/or other functions of the vehicle. As a specific aspect of ADAS functionality, autonomous driving functionality may allow the driver of a host vehicle (i.e. the vehicle to be controlled) to hand over the control of both acceleration and steering of the vehicle to an autonomous driving system, which may be provided with, for example, a target velocity and headway time or more detailed information so as to follow an intended route.

An ADAS may be adapted to react appropriately to other road-users, pedestrians, possible obstacles (e.g. a collision) and/or environmental conditions (e.g. heavy rain or snow). Accordingly, ADASs are generally configured to obtain information from equipment such as radars, sensors, cameras, inertial measurement units etc., in order to collect data about the vehicle and its environment and generate a high-level environment model describing the road on which the vehicle is travelling and the traffic on it.

In currently used ADAS functions, a vehicle may determine its position with respect to the road lanes, based on the data received from its own onboard sensors. Such a self-positioning is based on the detection of lane markers or lines painted on the road and in some cases also road barriers. Based on these detections, a road model is created, being a part of the vehicle's wider surrounding model.

In addition, GPS-based positioning solutions have their limitations. In particular, GPS signal may be weak in situations such as, for example, cities with densely built-up areas, tunnels or thickly wooded areas.

In view of such limitations, it is advantageous to provide additional means of collecting data about a vehicle and its environment.

As one such means, Vehicle-to-Infrastructure, V2I, systems may be applied in ADAS functions and as support for autonomous driving of vehicles.

V2I technology provides a communication infrastructure for vehicles to wirelessly and bidirectionally share data and information with a variety of devices provided along a road. The devices, which are typically permanently located in the elements of the urban and road infrastructure, may issue road users with real-time advisories about various incidents on the road: the possibility of collision with a pedestrian or other vehicle, an accident ahead, traffic congestions, construction sites, road conditions, parking zones and the like (Butakov et al., "Personalized Driver Assistance for Signalized Intersections Using V2I Communication", IEEE Transactions on Intelligent Transportation Systems, Vol. 17, Issue 7, July 2016, pp. 1910-1919; Olaverri-Monreal et al. "Implementation and Evaluation of a Traffic Light Assistance System Based on V2I Communication in a Simulation Framework", Journal of Advanced Transportation, Vol. 2018, Article ID 3785957).

An example of a V2I device is a roadside unit (RSU) . One of the aspects discussed in the prior art is to ensure the positioning of the RSU devices with an appropriate precision (KR 20170071207 (A); Wang et al., "A Tightly-Coupled GPS/INS/UWB Cooperative Positioning Sensors System Supported by V2I Communication", Sensors, 16(7), 944; doi:10.3390/s16070944, 2016). These methods are usually based on a direct use of the GPS devices. GPS-based solutions have their limitations. One of the important issues may be the power dissipation of such devices (an access to power line may be required) . This, in turn, will have an impact on the ease of assembly of such devices in the elements of the urban infrastructure. In case of not being directly related to driving safety, the power supply may be based on natural energy sources (solar, wind). However, this is not recommended (at least as only energy sources) in case of systems directly interfering with the manoeuvres performed by vehicles. Another solution that can be used in V2I systems is the use of passive or partially passive RSU devices. Such devices would normally be in a power down mode and would be awakened to operate by passing vehicles (Razvan et al., "Messaging capabilities of V2I networks", Procedia Manufacturing, Elsevier, Vol. 22, https://doi.org/10.1016/j.promfg.2018.03.073, 2018, pp.476-484").

Another method of positioning the RSU devices is a direct communication between these devices and passing vehicles (Amini et al.; "Improving GPS-Based Vehicle Positioning for Intelligent Transportation Systems", IEEE Intelligent Vehicles Symposium (IV), Electronic ISBN: 978-1-4799-3638-0, DOI: 10.1109/IVS.2014.6856592, 2014; Fascista et al.,

"A Localization Algorithm Based on V2I Communications and AOA Estimation", IEEE Signal Processing Letters, Vol. 24, Issue: 1, 2017). For this purpose, solutions known from real time location systems (RTLSs) may be used, based, for example, on IR-UWB (impulse radio - ultra wide band) technology. This technology offers a high positioning accuracy (Martynenko et al., "Implementation and Evaluation of a Two-Way-Ranging Module based on an IR-UWB Chip-Set", 12th Workshop on Positioning, Navigation and Communication (WPNC'15), Germany, 2015; Hassan et al., "Vehicle Localization System based on IR-UWB for V2I Applications", 8th International Conference on Computer Engineering & Systems (ICCES), 26-28 Nov. 2013; Llorente et al., "UWB technology for safety-oriented vehicular communications", Proc. SPIE 9807, Optical Technologies for Telecommunications 2015, 980705; doi:10.1117/12.2234430, 26 March 2016) and is therefore proposed as one of the possibilities of supporting the V2I system. In such systems, one of the devices sends a signal received by the second device that, in turn, sends a feedback signal received by the first device. The position of the device may be calculated on the basis of the measurement of the elapsed time between sending and receiving the signal.

[Summary]

[Technical Problem]

In the conventional applicable solutions of such ADAS functions, the vehicle determines its position in relation to the road on the basis of its own on-board sensors (cameras, radars, lidars). The position of the vehicle on the road is determined, for example, by recognizing lines and other markers painted on the road surface, as well as (in some cases) barriers along the roads. Based on these data sources, an image of the road (road model) is created, i.e. the location of particular lanes, and in the next step, the further course of the road, turns, etc.

This approach has several limitations. One is the range of lanes visible in the video stream captured by cameras. Naturally, e.g. due to the resolution of the cameras and other sensors installed in the vehicle, the position of the lanes with appropriate accuracy can only be determined up to several dozen meters ahead. In the event of a greater density of vehicles on the road or in traffic jams, this visibility is additionally limited to a few or a dozen meters. The lines on the road in many locations are of poor quality. They are often blurred if they have not been renovated for a long time (especially in cities), interrupted as a result of, for example, road surface renovation. They are often absent, especially on less significant roads in smaller towns. Sometimes different types of the line overlap. For example, when changing the organization of traffic in a given area, temporary lines are painted on the road, which overlap with lines regularly occurring in a given section.

All this creates a challenge for the algorithms responsible for precisely determining the course of the vehicle. In the case of roadside barriers, they are not available everywhere. In principle, they are available continuously only on expressways and on highways. This does not solve the problem of cities and suburban areas, where such barriers usually do not exist.

Further, the trajectory (in other words, the track, path or route) of the vehicle (local and in the global coordinate system (GCS)) may be determined based on the vehicle's GPS, as well as data provided by on-board sensors (yaw rate, velocity, etc.). Theoretically, on the basis of subsequent measurements by the vehicle of the distance to a given RSU, its location in the GCS can be determined. In practice, however, different factors will affect the accuracy of the measurements and calculations. Unfavourable factors occur on the sides of both communicating devices. External conditions (e.g. temperature) can affect their reaction times. The temperature may, for example, depend on the time needed to wake up the RSU device. However, this factor may theoretically be omitted, as after waking up, the RSU device remains active during the whole modulation and coding scheme (MCS). The response time of the device itself may, however, depend on the temperature, which will translate into a specific location error (Banach et al., "Real-time Locating Systems for Smart City and Intelligent Transportation Applications", 30th International Conference on Microelectronics (MIEL), Nis, Serbia, Oct. 2017, pp. 231-234.)

Another factor affecting the accuracy of determining the position of the RSU, in respect to the GCS, is the positioning accuracy offered by the GPS of the moving vehicle. Another unfavourable factor is the limited accuracy of the onboard sensors, on the basis of which the trajectory of the vehicle is determined. Data provided by these sensors may be noisy and require filtering that, in turn, introduces delays that depend on the filter parameters.

[Solution]

There is disclosed herein, in accordance with a first aspect herein, a method performed by an onboard unit of a vehicle, the method comprising: for each of a plurality of vehicle positions on a road, determining a direct distance between the vehicle position and a position of a roadside unit; and determining, based on the determined direct distance, a planar distance between the vehicle position in a horizontal plane containing the vehicle position and a projection of a position of the roadside unit onto a plane of the road, the determining of the planar distance being based on a height of the roadside unit relative to a ground level of the road.

Here, for each of the plurality of vehicle positions, the direct distance may be determined using an electromagnetic wave's travel time between the onboard unit and the roadside unit.

Further, for each of the plurality of vehicle positions, the direct distance may be determined by: transmitting a first electromagnetic signal from the onboard unit, the first electromagnetic signal having first data including an identification value of the onboard unit device; and receiving a second electromagnetic signal, the second electromagnetic signal having second data message including an identification value of the roadside unit and the identification value of the onboard unit device.

Here, the second electromagnetic signal may be a signal transmitted by the roadside unit after a delay time of a predetermined amount of time.

Here, the second data of the second electromagnetic signal may indicate the delay time.

The delay time may further be based on a measured clock value of the roadside unit.

Therein, the delay time may be changed as ambient temperature changes.

The first aspect may further comprise: determining a position of the vehicle relative to the position of the roadside unit based on the respective direct distances determined for each of at least two different positions of the onboard unit.

Here, this may further include transmitting a third electromagnetic signal to the roadside unit, the third electromagnetic signal having third data including indicating the position of the vehicle and at least a local part of an intended route of the vehicle; and receiving a fourth electromagnetic signal from the roadside unit, the fourth electromagnetic signal having fourth data including a virtual track for the vehicle.

Advantageously, this may further include using the virtual track in controlling a movement of the vehicle.

There is disclosed herein, in accordance with a second aspect, a method performed by a roadside unit, the method comprising, for each of a plurality of vehicle positions of a vehicle in a region defined relative to the roadside unit: receiving a first electromagnetic signal from an onboard unit of the vehicle, the first electromagnetic signal having first data including an identification value of the onboard unit device; transmitting a second electromagnetic signal, the second electromagnetic signal having second data message including an identification value of the roadside unit and the identification value of the onboard unit device.

Here, the second electromagnetic signal may be transmitted after a delay time of a predetermined amount of time.

Preferably, the second data of the second electromagnetic signal indicates the delay time.

Further, the delay time may be based on a measured clock value of the roadside unit.

In addition, the specific delay time may be changed as ambient temperature changes.

The method in accordance with a second aspect may further comprise: receiving a third electromagnetic signal from the roadside unit, the third electromagnetic signal having third data including indicating a position of the vehicle and at least a local part of an intended route of the vehicle; and transmitting a fourth electromagnetic signal to the roadside unit, the fourth electromagnetic signal having fourth data including a virtual track for the vehicle.

There is disclosed, in accordance with a third aspect herein, an onboard unit comprising a transmitting/receiving section, a control section, and a memory section, wherein the control section is configured to control the onboard unit to perform a method in accordance with the first aspect herein.

There is disclosed, in accordance with a fourth aspect herein, a roadside unit comprising a transmitting/receiving section, a control section, and a memory section, wherein the control section is configured to control the onboard unit to perform a method in accordance with the second aspect herein.

The roadside unit may be adapted to be mounted in a road infrastructure post or pole.

The roadside unit may further be adapted to be mounted in a lamp holder of a road infrastructure post or pole.

Here, the roadside unit may be adapted to be mounted near a surface of the lamp holder providing hear exchange for the roadside unit.

The roadside unit may further be adapted to be mounted in a lamp socket

The roadside unit may further be adapted to be mounted on a surface of a bulb for lamp of a road infrastructure post or pole.

Here, the roadside unit may be integrated with the bulb during manufacture of the bulb.

The roadside unit may further be adapted to be mounted on a boundary between a lamp holder and exterior of the lamp holder of a road infrastructure post or pole.

The roadside unit may further be adapted to be powered by one or more of solar energy, thermal energy, wind energy and/or electric energy.

[Brief Description of the Drawings]

Embodiments of the disclosure will now be explained in detail, by way of non-limiting example only, with reference to the accompanying figures, described below. Like reference numerals appearing in different ones of the figures can denote identical or functionally similar elements, unless indicated otherwise.

Figure 1 is a schematic illustration of an OBU and an RSU according to an example embodiment herein.

Figure 2 is a schematic illustration of programmable signal processing apparatus according to an example embodiment, which may be configured to implement the functionality of the OBU or the RSU.

Figure 3 is a flow diagram illustrating a process according to a sample embodiment by which the OBU of a vehicle operates to determine a direct and planar distance of the vehicle.

Figure 4 is a schematic illustration showing the relationship between direct distance, planar distance, and height H.

Figure 5 is a schematic illustration of an example embodiment of the electromagnetic wave's travel time to determine a direct and planar distance of the vehicle.

Figure 6 is a schematic illustration of an example embodiment of using the position of the vehicle to determine a virtual track for the vehicle.

Figure 7 is a flow diagram illustrating a process according to another sample embodiment by which the OBU of a vehicle operates to determine a direct and planar distance of the vehicle.

Figure 8 is a schematic illustration of mounting the RSU on the surface of a bulb in the RSU, wherein the bulb may be mounted, for example, in a streetlamp holder.

[Detailed Description]

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

The present disclosure is based on the general concept that V2I technology is used for the creation of virtual tracks. A virtual track, i.e. a track (or path or course) created by a computational device for the vehicle to automatically follow, may be considered as a series or set of consecutive location points to be followed by a vehicle in a prescribed order, and preferably in prescribed time intervals between the respective location points. In other words, the virtual track may be considered as a series of consecutive location points with respect to the road edges that are transferred to the vehicle in order to cause the vehicle to follow an intended route, and preferably to follow the intended route also in an intended time. That is, the consecutive location points may by intermediate, time-dependent points of a trajectory of a vehicle, for example within individual intersections or roundabouts.

One of the potential use cases of V2I technology in supporting ADAS functionality is the creation of such virtual tracks, in which a system of preferably evenly deployed V2I communication device, which may be referred to as roadside units (RSU), communicate wirelessly with a vehicle that is also equipped with a V2I communication device, which may be referred to as an onboard unit (OBU), so as to keep the vehicle on the road on a predefined course, as predefined by the virtual track.

Such a predefined course can be understood as a sequence of vehicle positions defining a trajectory of a vehicle along a road, that is a series of consecutive location points with respect to the road edges that are transferred to the vehicle in order to cause the vehicle to follow an intended route. Such vehicle positions or location points should generally be accurate enough, as far as both longitudinal ('x' direction) and lateral ('y' direction) positions are concerned, so that the explicit and short-term trajectory for all the upcoming manoeuvres may be determined.

The creation of virtual tracks allows the vehicle to be kept in a specific lane with a specified accuracy over a longer road section or at specific points / areas, e.g. in cities. The proposed methods may support such ADAS functions whose operation is based on a precise determination of the vehicle's position or location with regard to the road and its surroundings. Such ADAS functions include, for example, Lane Departure Warning (LDW), Autonomous Emergency Breaking (AEB), Lateral Control (LC), Adaptive Cruise Control (ACC), Traffic Jam Assist (TJA), Traffic Sign Recognition (TSR), Intersection Assist (IA), etc.

The present disclosure proposes a system, in which a group of RSU devices can be used to form a network of permanently fixed V2I transponders mounted in the road infrastructure to enable a local navigation in the terrain, largely independent of the GPS system. Such solutions may be particularly beneficial in locations where GPS signal is weak. This applies, for example, to cities with dense built-up areas, tunnels or thickly wooded areas.

A network of evenly deployed V2I transponders mounted in close proximity to or along traffic routes may help to assign intermediate target positions of a virtual track for the vehicles (or other moving objects) that are within this network's range and have a compatible technology onboard. These intermediate target positions of a virtual track may be treated as short-distance destinations for moving autonomous vehicles or the ones that make use of selected features of autonomous drive - selected ADAS functions, e.g. ACC / TJA or LC.

In the currently used ADAS functions, by contrast, a vehicle determines its position with respect to road lanes, based on data received from its own onboard sensors. Such a self-positioning is based on the detection of lane markers or lines painted on the road and in some cases also road barriers. From these detections, a proper road model is created, being a part of a wider vehicle's surrounding model.

A system of V2I transponders may provide an effective solution to the above-mentioned problems. However, in order to implement such V2I solutions for application in ADAS function, it is necessary to define an adequate architecture and operation. A further requirement for facilitating dissemination of such solution is to reduce the costs of creating, assembling and maintaining such a system based on V2I technology.

In general, such V2I solutions could contribute to the positioning aspects of ADAS functionality by using distances measured between RSU and OBU devices. An OBU may be mounted in a specific location of the vehicle. An RSU may, for example, be mounted on elements of urban lighting infrastructure, such as is available in almost all types of communication routes. Such elements are poles with lighting lamps, available practically everywhere in cities and in urbanized areas. More generally, an RSU may be mounted on any suitable element of infrastructure (e.g. telephone poles, public buildings, traffic lights, road signs, etc.).

In general, a distance between an RSU and an OBU may be determined using appropriate telecommunications technologies that allow a time it takes an electromagnetic wave to travel from the vehicle (in particular, the OBU, to RSU and back to be measured or any other suitable means. Such techniques allow a direct Euclidean distance (also referred to as a direct distance herein, denoted as $D_{L2}$) between the RSU and the OBU to be measured. Such a direct distance will account not only for the lateral and longitudinal components of the distance between the OBU and the RSU, but also for the difference in height between the OBU and the RSU.

However, high-level environment models used by vehicles having autonomous driving and/or other ADAS functionalities are generally defined only or primarily in the longitudinal and lateral directions with respect to the vehicle. As such, there is a need to project such measured direct distances to the plane defined by the longitudinal and lateral directions with respect to the vehicle so that the position of the RSU relative to the OBU may be appropriately defined within the environment model.

That is, the key to achieve the required accuracy is not the determination of the direct distance to the RSU itself, but to determine a planar distance between the position of the OBU in a horizontal plane containing the OBU, and a projection of the position of the RSU onto the plane. This may take the form of, for example, the distance in the plane between the position of the OBU and the mounting position on the ground of a pole (e.g. a light pole or the like), on which this RSU is attached.

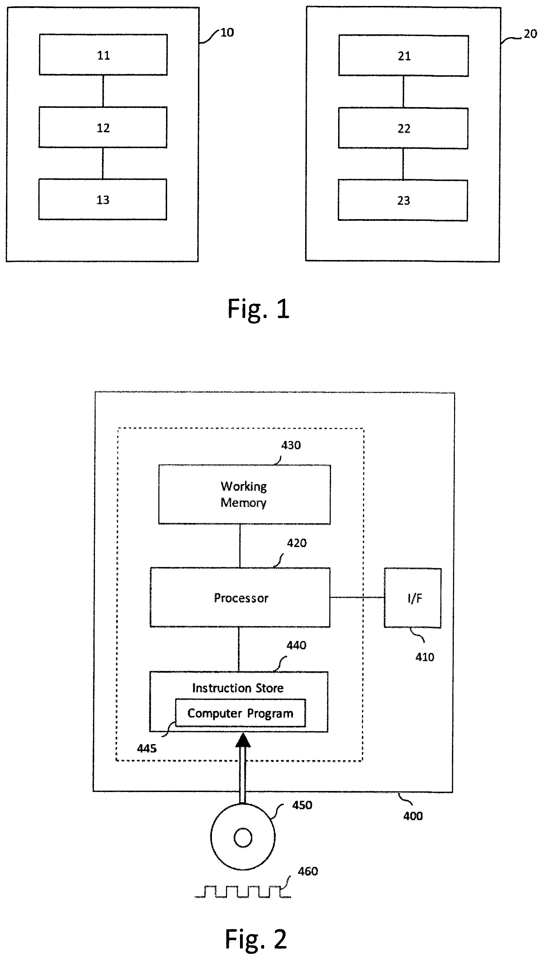

Fig. 1 is a schematic illustration of an OBU 10 and an RSU 20, according to an example embodiment herein.

As shown in Fig. 1, the onboard unit 10 (OBU 10) comprises a transmitting/receiving section 11, a control section 12, and a memory section 13. The control section 12 is configured to control the onboard unit 10 to perform various methods in accordance with the example embodiments described herein.

Here, an example of the transmitting/receiving sections 11 and 21 is a wireless transceiver, an example of the control sections 12 and 22 is a microprocessor, and the memory sections 13 and 23 may be any kind of memory block sufficient to store all the necessary information.

Similarly, as shown in Fig. 1, the roadside unit 20 (RSU 20) comprises a transmitting/receiving section 21, a control section 22, and a memory section 23. The control section 22 is configured to control the roadside unit to perform various methods in accordance with the example embodiments described herein.

Both of OBU 10 and RSU 20 may be considered as V2I communication devices, and the RSU 20 may be considered as a transponder (e.g. a stationary device being able to create a frame of reference for moving devices). As such, transmitting/receiving section 11 may comprise any means necessary to enable the OBU 10 to perform V2I communication with RSUs, such as RSU 20, and, optionally, other vehicles and/or objects within its communication range according to any suitable V2I communication standard known in the art. Similarly, transmitting/receiving section 21 may comprise any means necessary to enable the RSU 20 to perform V2I communication with OBUs, such as OBU 10, and, optionally, other RSUs and/or objects within its communication range according to any suitable V2I communication standard known in the art.

By way of example, each of transmitting/receiving sections 11 and 21 may, as in the present example embodiment, perform communication in accordance with, for example, Impulse-Radio Ultrawideband technology (IR-UWB). By way of alternative, each of transmitting/receiving sections 11 and 21 may perform communication in accordance with cellular-based V2I technology, WLAN-based V2I technology (e.g. Dedicated Short Range Communication, DSRC), or any other wireless technology.

Additionally, the transmitting/receiving section 11 of the OBU may, as in the present example embodiment, comprise one or more interfaces or any other means necessary to communicate with a vehicle in which it is mounted, including exchanging information with other modules of the vehicle (e.g. receiving data from other measurement devices, cameras or sensors provided in the vehicle or providing information to one or more modules responsible for autonomous control of the vehicle).

In some example embodiments, the OBU 10 and/or the RSU 20 may comprise any sensors or other suitable means known in the art for collecting data about the vehicle and its environment. By way of example, one or both of the OBU 10 and the RSU 20 may comprise one or more of temperature sensors, humidity sensors, ambient light sensors, cameras, etc. In such example embodiments, control sections 12 and 22 may be appropriately adapted to control sensors or other means, including control to perform measurements, control to process the measurement results, control to store the processed measurement results in memory sections 13 and 23, respectively, and/or control to transmit these to another entity.

As will be discussed in further detail below, the memory section 23 of the RSU 20 may be configured to store a distance determination function in accordance with example embodiments herein. Techniques for distance determining functions in accordance with example embodiments herein are discussed in detail below.

Additionally or alternatively, the control section 12 of OBU 13 may, as in the present example embodiment, be configured, on its own or together with other modules of the vehicle in which it is mounted, to collect data about the vehicle and its environment and to generate a high-level environment model describing the road on which the vehicle is travelling and the traffic on it. Alternatively, the transmitting/receiving section 11 may be configured to receive an environment model from another entity (e.g. within the vehicle). In such example embodiments, the memory section 13 of the OBU 10 may be configured to store the generated high-level environment model. Alternatively, such a high-level environment model may be stored in another memory section of the vehicle, e.g. a memory section used to support ADAS functionality, and the OBU 10 may be configured to access the model or parts thereof as necessary.

Similarly, the memory section 23 of the RSU 20 may be configured to store an environment model, as described above, or a part thereof relating to an area in the vicinity of (e.g. in a predetermined limited area around) the RSU 20. By way of example, the RSU 20 may be configured to generate such an environment module or to receive such an environment model from another entity.

Such an environment model may be defined by any suitable means, such as, for example, a global coordinate system (GCS), a lane coordinate system (LCS) or a grid model or any other suitable means such that the position of the OBU 10 relative to other objects (e.g. boundaries of the road and lanes, other vehicles, RSUs, etc.) may be defined over time and as the position of vehicles changes.

By way of example, the environment model may be defined in an LCS. The LCS may be a two-dimensional curvilinear coordinate system adapted to reflect a road on which the model is based. In particular, a curvilinear coordinate system constituting the LCS may have two axes, namely a longitudinal axis or $x$-axis, which extends in a longitudinal direction along the road, and a lateral axis or $y$-axis, which extends across the road. The $x$-axis is always parallel to the lanes of the road and the $y$-axis is orthogonal to the $x$-axis at every value of $x$. The $x$-axis of the LCS may be defined to increase in the direction of forward travel of the vehicle and the $y$-axis of the LCS to increasing in the direction of the left-most lane of the road. However, the LCS may be orientated in any other suitable way. The LCS and thus the model may, however, be defined in other ways, for example using a Cartesian coordinate system.

Objects may be defined in the environment model in any suitable way for the coordinate system used, e.g. as a (programming) object having dynamic properties or by one or more cells of a grid having dynamic properties. Distances between various objects in the environment model may be determined based on the lateral and longitudinal positions of said objects in the environment model. The lateral and longitudinal positions of objects in the environment model may, for example, be defined with respect to a centre of a bounding box of the object or in relation to any other predefined reference point of the object such as, for example, a predetermined corner of the bounding box, a centre of mass or a centroid of the object, etc.

Fig. 2 is a schematic illustration of programmable signal processing apparatus 400, which may be configured to implement the functionality of the OBU 10 or the RSU 20 of Fig. 1.

The signal processing apparatus 400 has an interface module 410 providing means (e.g. one or more antennae or wired connections) for transmitting and receiving information. The signal processing apparatus 400 also has a processor 420 (e.g. a CPU) for controlling the programmable signal processing apparatus 400 to perform the functions of the OBU 10 or the RSU 20, a working memory 430 (e.g. a random-access memory) and an instruction store 440 storing a computer program 445 having computer-readable instructions which, when executed by the processor 420, cause the processor 420 to perform the functions of the OBU 10 or the RSU 20.

The instruction store 440 may include a ROM (e.g. in the form of an electrically-erasable programmable read-only memory (EEPROM) or flash memory) which is pre-loaded with the computer-readable instructions. Alternatively, the instruction store 440 may include a RAM or similar type of memory, and the computer-readable instructions can be input thereto from a computer program product, such as a computer-readable storage medium 450 such as a CD-ROM, etc. or a computer-readable signal 460 carrying the computer-readable instructions.

The programmable signal processing hardware 400 of Fig. 2 may, as in the present example embodiment, be configured to function as an OBU 10 or an RSU 20. However, each of the OBU 10 and the RSU 20 may alternatively be implemented in non-programmable hardware, such as an application-specific integrated circuit (ASIC) or in any other suitable manner, using any suitable combination of hardware and software components.

The present inventors have developed various techniques, based on V2I technology, that aim to improve the precision of vehicle location estimation on a road. In particular, the present inventors have devised techniques for determining accurate planar distances, in accordance with example embodiments herein.

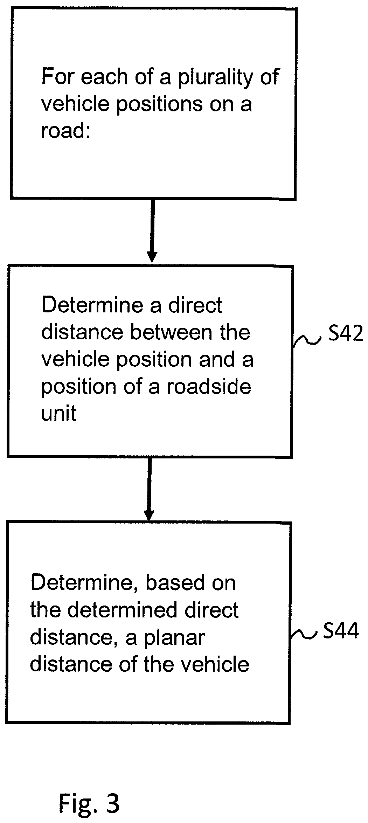

Fig. 3 is a flow diagram illustrating a process by which the onboard unit 10 of a vehicle operates to determine a planar distance of the vehicle to a projected position of the roadside unit (while the roadside unit is mounted at a specific height relative to the ground level of the road, as shown in Fig. 1).

By way of example, the process of Fig. 3 may be computer-implemented. In particular, the process of Fig. 3 may, as in the present example embodiment, be implemented by computing means provided with means suitable for measuring direct and planar distances, distance travelled between positions at which the vehicle is situated at consecutive moments in time. Alternatively, the process of Fig. 3 may be implemented by computing means configured to obtain previously acquired measurements, e.g. over a network or from a memory.

By way of specific example, the process of Fig. 3 may, for example, be implemented by a specialised vehicle equipped with appropriately programmed computing means and precise measurement devices that facilitate measurement of the following values:

- a direct distance $D_{L2,i}$ between the respective vehicle positions $P_i$ and a position of the roadside unit 20; and
- a planar distance $D_{P,i}$ between the respective vehicle positions $P_i$ in a horizontal plane containing the vehicle position $P_i$, and a projection of the position of the roadside unit 20 onto the plane.

Specifically, the flow diagram of Fig. 3 shows that, for each of a plurality of vehicle positions, the roadside unit operates in step S42 to determine a direct distance between the vehicle position and a position of a roadside unit, and operates in step S42 to determine, based on the determined direct distance, a planar distance between the vehicle position in a horizontal plane containing the vehicle position and a projection of a position of the roadside unit onto a plane of the road. In step S44, the planar distance is determined based on a height of the roadside unit relative to a ground level of the road.

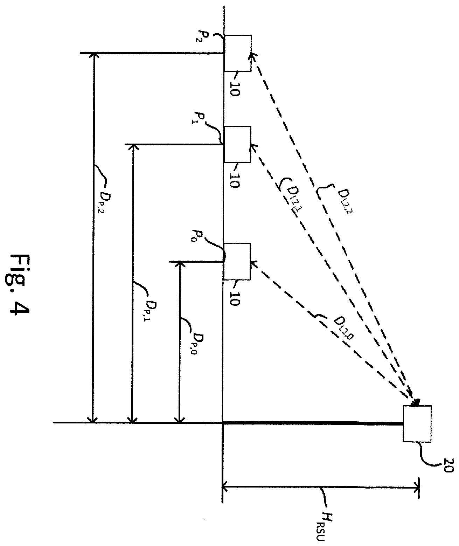

That is, the planar distance is a distance to a projected position of the RSU to the ground level of the road while the RSU is mounted at a specific height over a road. Fig. 4 is a schematic illustration showing the relationship between direct distance $D_{L2,i}$, planar distance $D_{P,i}$, and the height $H$, at which the RSU is mounted. As shown in Fig. 1, as a vehicle, on which an OBU 10 is mounted, travels in the vicinity of an RSU 20, a direct distance $D_{L2,0}$, $D_{L2,1}$, $D_{L2,2}$ is measured for each of three vehicle positions, $P_0$, $P_1$, and $P_2$. Each of vehicle positions, $P_0$, $P_1$, and $P_2$ represent a position of the vehicle, on which OBU 10 is mounted, at a given moment in time, e.g. as the vehicle travels.

At each of positions $P_0$, $P_1$, $P_2$, in Fig. 4 the height of the RSU 20 relative to the road (ground surface) surface is constant and defined by the height $H_{RSU}$ at which the RSU 20 is mounted. By way of example, in the simplest case, the height of the RSU 20 relative to the ground surface is taken to be height $H_{RSU}$ as shown here. However, elements such as the mounting height of the OBU 10 in the vehicle may also be taken into account, for example, by subtracting this mounting height from height $H_{RSU}$ in order to obtain the height of the RSU 20 relative to the height of the OBU 10 (see further discussion below).

In this case, the planar distances $D_{P,0}$, $D_{P,1}$, $D_{P,2}$ for each of positions $P_0$, $P_1$, $P_2$ can be readily calculated based on the height $H$ and the direct distances $D_{L2,0}$, $D_{L2,1}$, $D_{L2,2}$ using, for example, Pythagoras theorem:

$$D_{\mathrm{P}} = \sqrt{D_{\mathrm{L2}}^2 - H_{\mathrm{RSU}}^2} \qquad\qquad (1)$$

Knowing the distance to the RSU and the height of the pole, it is therefore possible to calculate such a planar distance using, for example, Pythagoras theorem.

If the height $H_{RSU}$ is used in Eq. (1) for each of positions $P_0$, $P_1$, $P_2$, it is in fact assumed that the terrain in proximity of the RUS is flat, so in each position of the vehicle $P_i$, the value of $H_{RSU}$ is the same. In cases in which the terrain is not flat, the ground level is different for the vehicle and at the position of the pole, appropriate different values can be taken in each point $P$, for example, by using an appropriate height correction function.

Here, the direct (Euclidian) distance may, for each of the plurality of vehicle positions, be determined using an electromagnetic wave's travel time between the OBU and the RSU based on time-of-flight (TOF) technology.

A preferred embodiment of using the electromagnetic wave's travel time by which the direct distance $D_{L2}$

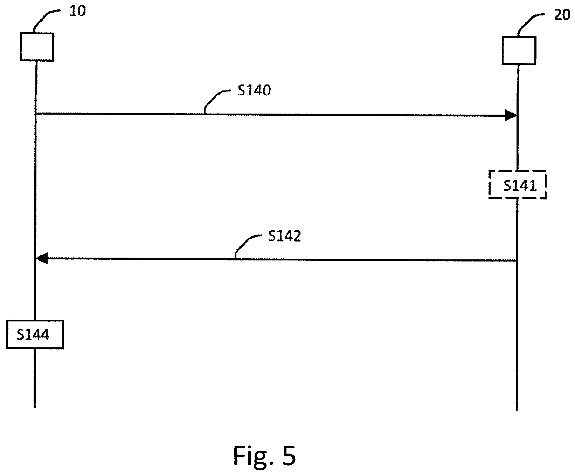

between the OBU 10 and the RSU 20 may be determined is illustrated in Fig. 5.

According to Fig. 5, the transmitting/receiving section 11 of the OBU 10 transmits a first electromagnetic signal to the RSU 20 in step S140 and receives a second electromagnetic signal from the transmitting/receiving section 21 of the RSU 20 in step S142.

The first electromagnetic signal identifies the OBU 10. Here, the first electromagnetic signal has (e.g. encodes) first data including an identification value $ID_{OBU}$ of the OBU 10. The information identifying the OBU 10 may have any suitable from, e.g. an index, global or local ID number, or any suitable identifier that allows the OBU to be uniquely identified, and may, for example, be transmitted as a data packet or data message.

By way of example, the OBU 10 may switch to a listening mode after process step 140, i.e. a mode in which the OBU 10 is specifically configured to wait for the response signal. The listening mode avoids repetitive transmission of electromagnetic signals according to step S140 in a listening time window which would otherwise lead to an overflow of signals at the RSU 20.

The second electromagnetic signal (response signal) in step S142 has (e.g. encodes) second data, for example in a data message or data packet, including the identification value $ID_{OBU}$ of the OBU 10 and an identification value $ID_{RSU}$ of the RSU.

In particular, there may be multiple RSUs within a communication range of the OBU 10, each of which may receive the signal comprising the information identifying the OBU 10 from the OBU 10. Accordingly, by including the information identifying the RSU 20 in the response signal, the OBU 10 may readily determine the specific RSU with which it is communicating. Similarly, there may be multiple OBUs within communication range of the RSU 20, each of which may receive the response signal from the RSU 20. Accordingly, by including the information identifying the OBU 10 in the response signal, each OBU in communication range of the RSU 20 may readily determine whether or not the response signal is addressed thereto.

In process step S144, the control section 12 of the OBU 10 calculates the direct distance $D_{L2}$ between the OBU 10 and the RSU 20 based on an elapsed time between transmitting the signal and receiving the response signal. By way of example, this may be achieved using known techniques for time-of-flight technology based on the elapsed time and a known or estimated propagation speed of the electromagnetic signal and response signal.

The electromagnetic signals typically propagate outwards in all directions. As such, ambiguity can occur with a single time-of-flight communication session and distance measurement. On the basis of such a single session, it can only be determined that RSU 20 is somewhere on a circle/sphere with the $D_{L2}$ radius from OBU 10. However, for example, it is not determinable whether RSU 20 is in front of or behind the vehicle in which OBU 10 is mounted, etc. When the vehicle travels along a certain road section, it first approaches the pole, passes it, and then moves away from it. As such, with some simplification, there may be at least two different points along the road with respect to RSU 20 where the measured value of $D_{L2}$ is identical. Furthermore, due to ambient noise, interference, etc. a single exchange of the signal and response signal between the OBU 10 and RSU 20 may not enough for precise position estimation of the OBU 10, and thereby the vehicle on which it is mounted, in the space.

Therefore, the OBU 10 is configured to repeat the process of Fig. 5 to calculate a direct distance for each of at least two different positions of the onboard unit, the at least two different positions of the onboard unit including the position of the onboard unit.

By way of example, the OBU 10 may repeat the transmission after a specified time with the RSU 20. At the same time, the vehicle, on which the OBU 10 is mounted, is moving so it can be assumed that its intermediate positions may be determined in one of the following ways:

- Position change estimation ($\Delta x$ and $\Delta y$) based on the travelled distance since the last communication session between OBU and RSU. The trajectory of the vehicle from this time may be calculated precisely with the use of onboard sensors, such as yaw rate or velocity sensors.
- These positions may be estimated based on the communication with the previously identified RSU that is mounted on an infrastructure element that the vehicle has already passed.

Optionally, in some preferred embodiments, the RSU 20 may transmit the response signal (second electromagnetic wave) after a delay time r of a predetermined amount of time, as indicated by process step S141 in Fig. 5 (dashed lines indicating an optional step).

In particular, it is generally not possible for the RSU 20 to transmit the response signal at the same time as the signal comprising the information identifying the OBU 10. Instead, there will be a finite amount of time between the time at which the transmitting/receiving section 21 of the RSU 20 receives the signal and the time at which the transmitting/receiving section 21 transmits the response signal due to the need for the RSU 20 to decode the signal, generate an appropriate response, encode the response as a signal, etc. The amount of time required for such processing may vary from RSU to RSU due to, for example, differences in processing speed and environmental factors such as ambient temperature, which may affect the speed of some circuits (e.g. CMOS circuits).

Accordingly, by delaying transmitting the response signal for a predetermined amount of time, it is possible to account for variability in processing speeds at the RSU 20 end. By way of example, the predetermined amount of time may be set so as to be slightly longer than an estimated processing time of an RSU in a V2I transponder system having a slowest processing speed. As such, even though the OBU 10 is not aware of the processing time required at the RSU 20 side, the OBU 10 may simply subtract the predetermined amount of time from the elapsed time in order to more accurately determine the actual travel time of the signal and response signal. This may, in turn, result in a more accurate determination of the direct distance $D_{L2}$.

Advantageously, the second data of the second electromagnetic signal transmitted in step S142 also indicate the delay time $\tau_{del}$ used by the RSU 20. Taking the appropriate delay time into account at the OBU 10 allows for an accurate determination of the direct distance and provides flexibility for the Rsu 20 to change the delay the delay time as required.

For example, the control section 22 of the RSU 20 may be configured to change the predetermined amount of time of the delay time as the ambient temperature changes. In such examples, the RSU 20 may comprise an ambient temperature sensor or be configured to receive information on the ambient temperature from another entity. This may allow the effect of changing ambient temperature on processing speed to be accounted for. By way of example, both the RSU 20 and OBU 10 may be configured to monitor ambient temperature and apply a known change to the predetermined amount of time as ambient temperature changes.

The delay time which is applied in step S141 of Fig. 5 may be based on a measured clock value of the RSU. That is, the control unit of the RSU may count internal clock values of the processor 420 and thus determine whether or not the delay time $\tau_{del}$ has expired.

The control section 12 of the OBU 10 may be further configured to determine the position of the OBU 10 relative to the position of the RSU 20 based on the respective direct distances calculated for each of at least two different positions of the OBU 10.

In particular, based on the series of all these intermediate positions measured and the distances to the given RSU 20 measured/calculated at these positions, the control section 12 of the OBU 10 may estimate the vehicle's location with respect to the RSU. For this purpose, well-known methods of triangulation or trilateration may be used.

If the RSU 20 has access to the information about its own location in global coordinate system (GCS) and shares this information with the OBU 10 in consecutive communication sessions, then the OBU 10, and thus the vehicle in which it is mounted, is able to estimate its location in the GCS as well.

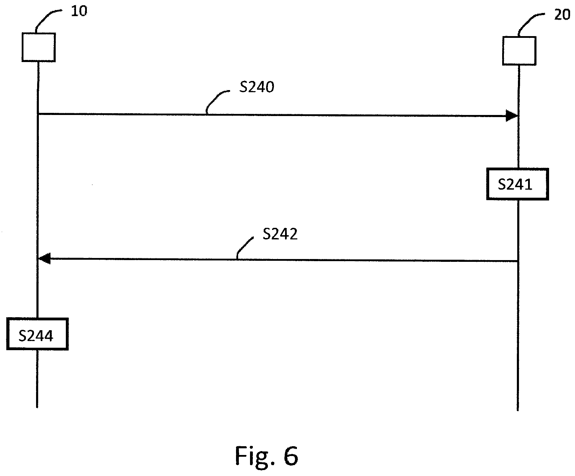

A further preferred embodiment of using the determined position of the vehicle relative to the position of the roadside unit based on the respective direct distances determined for each of at least two different positions of the onboard unit (as described above) to determine a virtual track is illustrated in Fig. 6.

In process step S240 of Fig. 6, the transmitting/receiving section 11 of the OBU 10 transmits, to the RSU 20, an electromagnetic signal (third electromagnetic signal) which has (e.g. encodes) the determined position of the vehicle and at least a part of an intended route of the vehicle. Here, the partial information of an intended route of the vehicle may include partial route information within a local area of the roadside unit so that not the full data amount of the entire intended route of the vehicle has to be transmitted to the RSU 20. Here, the third electromagnetic signal may also include the identification values of the OBU 10 and the RSU 20. By transmitting the third electromagnetic signal, the OBU 10 advantageously requests a support from the RSU 20 in controlling a movement of the vehicle on the intended route.

In process step S241 of Fig. 6, the control section of the RSU 20 uses the position of the vehicle and the information indicating at least a part of an intended route of the vehicle to determine a virtual track for the vehicle. As described above, the virtual track may be considered as a series or set of consecutive location points to be followed by the vehicle in a prescribed order. The virtual track may be provided as a series of control commands for the (autonomous) vehicle to follow the consecutive location points in prescribed order and time. Here, the virtual track is based on the intended route and thus includes, for example, a specific control for a turn command at an intersection or a roundabout. The virtual track for the vehicle may further be determined by taking into account available lanes on the road, traffic directions and/or traffic conditions which may be provided to the RSO 20 from an external server.

The virtual track of the vehicle can be determined based on the information about the destination received by the RSU from the vehicle. An autonomous vehicle that travels through the city between two locations needs to plan its route that includes all the streets, intersections and roundabouts that it needs to pass through. In a preferred embodiment an autonomous vehicle may exchange (e.g. constantly or continuously) partial information about this route with a system of RSUs - each RSU receives information about this route fragment that is the closest to its own mounting location. Using this information, a respective RSU locally selects a trajectory or virtual track for the given vehicle, by returning a set of short-range points. The returned virtual track is preferably based on all available lanes and their possible traffic directions.

In that context, it is assumed that the system of RSU devices has the up-to-date information about lanes' travel directions or other restrictions that make travelling along a particular lane impossible (e.g. roadworks). Additionally, the proposed system could also include other traffic information that could affect a trajectory or virtual track created and returned by the RSU to the vehicle. This can include current state of the road or traffic, e.g. accidents, roadworks or traffic intensity, as well as other data that has influence on the vehicle's motion, like traffic lights or speed limitations.

In process step S242 of Fig. 6, the transmitting/receiving section 11 of the OBU 10 receiving an electromagnetic signal (fourth electromagnetic signal) from the RSU 20, the fourth electromagnetic signal having fourth data including the virtual track determined in step S241 for the vehicle. Again, the fourth electromagnetic signal includes the identification values of the OBU 10 and the RSU 20 to verify that the virtual track is only used by the identified vehicle. The skilled person understands that the electromagnetic signals described herein may be further encrypted in an appropriate way to avoid third-party attacks or the like.

In process step S244 of Fig. 6 the received virtual track are used by the RSU 10 to control the movement of the vehicle. That is, the RSU 10 may transmit control commands related to the virtual track to the vehicle control (such as an ECU of the vehicle) so that appropriate driving commands are provided to the steering and/or speed control of the vehicle to follow the virtual track. As such, the vehicle may follow an accurate short-time trajectory as it is intended according to the route.

A plurality of vehicle positions $P_i$ of a virtual track may, for example, be defined within a predetermined region relative to a RSU 20.

By way of example, the predetermined region may, as in the present example embodiment, be defined based on the communication range of the RSU 20 such that the RSU 20 may reliably (e.g. below a specific error rate, below a specific signal strength or quality, or the like) perform V2I communication with an OBU (e.g. OBU 10 shown in Fig. 1) located at any of the plurality of vehicle positions $P_i$. Alternatively, the predetermined region may be defined by any suitable means, e.g. as all positions for which the RSU is the closest RSU to that position in cases where a network of V2I transponders is used.

Additionally or alternatively, the plurality of vehicle positions $P_i$ may comprise a sequence of positions defining a trajectory of a vehicle along a road within the predetermined region. As roads generally consist of at least one lane for which a direction of travel is defined, each of the plurality of vehicle positions $P_i$ may have an associated direction of travel. For each vehicle position $P_i$, this associated direction of travel may be the direction in which the vehicle must move in order to reach the next position in the trajectory.

The plurality of vehicle positions $P_i$ of a virtual track may be defined at any suitable level of granularity and may be irregularly spaced. In example embodiments such as the present example embodiment in which the plurality of vehicle positions $P_i$ may comprise a sequence of positions defining a trajectory, each pair of consecutive vehicle positions $P_i$ should be sufficiently close together so that the vehicle may be safely controlled to move directly from one vehicle position $P_i$ to the next vehicle positions of a virtual track while maintaining a safe position with respect to road and lane boundaries.

The above embodiments of creating virtual tracks, along which the vehicle could move, are robust to intentional trials of deceiving the vision systems that enable keeping the vehicle on the given lane (Lane Keep Assist). Such vision systems rely on the detection of painted lines on the road or the positions of other road markings (e.g. Botts' Dots). In case someone deliberately blurs these lines or occludes the road markings the vision system performance could be highly restricted. In contrast, the proposed approach is independent of any similar attacks. Moreover, it is much harder to disrupt the operation of the proposed system due to difficult access to its elements (e.g. light pole heights on which RSUs are mounted) and protected radio communication (of some already existing protocol or standard).

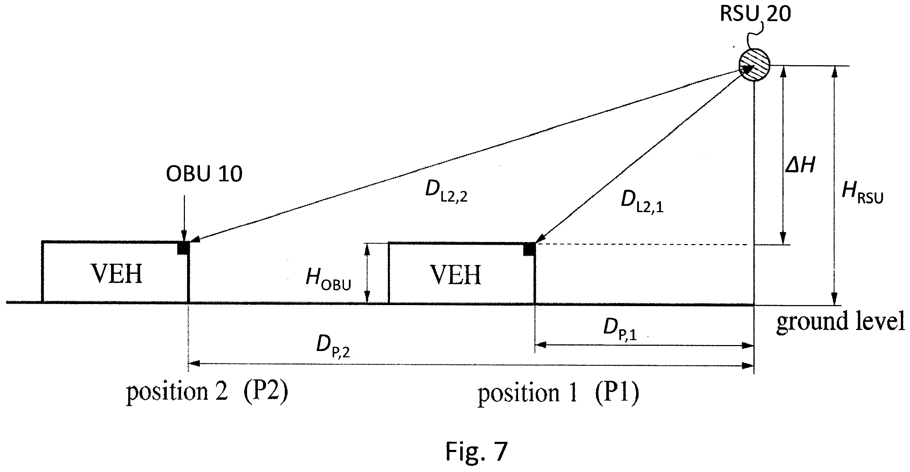

A further preferred embodiment for the determination of the distance between OBU and RSU and the position of the vehicle on the road is described in conjunction with Fig. 7.

Specifically, Fig. 7 illustrates that from the OBU device 10 mounted at a specific and known position in the host vehicle (VEH, which may be an autonomous vehicle), an electromagnetic signal encoding a data package is propagated outwards in all directions. Then, the OBU 10 switches to a listening mode. The data package (message) being sent includes the OBU's identification number ($ID_{OBU}$). The skilled person understands that any standard telecommunication protocol may be used for the transmission and reception of respective data packages. One of the potential technologies used in this case may be the IR-UWB (Impulse-Radio Ultra-Wideband) communication standard that offers a sufficient precision when determining the distance between two devices that wirelessly communicate with each other, especially under LOS (line of sight) conditions.

The RSU device 20 in Fig. 7 that received the electromagnetic signal transmitted by the OBU device 10 sends back a corresponding electromagnetic signal after a specific (constant) amount of time. Such a time value can be defined as a constant delay time $\tau_{del}$ (a parameter) between the reception of the signal from the host vehicle and the transmission of the return signal to the vehicle. This is related to the fact that the RSU device, designed for example, as a specialized chip, may be equipped with a clock capable of measuring the delay time $\tau_{del}$ with a sufficient precision. The application of the clock makes the delay time $\tau_{del}$ independent of ambient temperature that can affect the operation of the RSU device. In the proposed solution, the value of the delay time $\tau_{del}$ may also be returned to the OBU device, as part of the message sent back to the host vehicle. The message also contains the RSU's own identification number ($ID_{RSU}$). This $ID_{RSU}$ is relevant since in the OBU's range there might be more RSU devices at a given time. In the proposed solution, the RSU device returns also the $ID_{OBU}$ of the OBU to which it is currently responding, since in its surroundings there might be more OBU devices which try to communicate at the same time. As a result, the pair of associated RSU-OBU devices that are communicating with each other, may be identified by the pair {$ID_{OBU}$, $ID_{RSU}$}. In case in which there are more vehicles in the given area, when the communication is established, a given OBU device will not be allowed to communicate with the corresponding RSU device for the predefined amount of time, to not to block the communication channel.

The OBU device 10 in Fig. 7, upon receiving the response signal, calculates the time that passed between emitting its own signal and receiving the response signal by taking into account the value of the delay time $\tau_{del}$ discussed above. Based on the measured wave's travel time, the OBU 10 determines the distance direct $D_{L2}$ to the corresponding RSU device.

As explained above, a single communication session is typically insufficient for a precise position estimation of the vehicle on the road. For this reason, the OBU 10 in Fig. 7 may repeat the transmission after a specified time with the same RSU device 20. Since the vehicle is moving between particular communication sessions, the vehicle's intermediate positions may be determined, for example, in one of the following ways:

  a) Position change estimation ($\Delta x$ and $\Delta y$) may be based on the travelled distance since the last communication session between the OBU and the RSU. The trajectory of the vehicle from this time may be calculated precisely with the use of onboard sensors, such as yaw rate or velocity sensors.

  b) These positions may be estimated based on the communication with the previously identified RSU that is mounted on the light pole that the vehicle has already passed.

Based on a series of all the measured intermediate positions, as well as the distances to a given RSU determined/calculated at these positions, the vehicle's location or position can be accurately determined with respect to this RSU device. For this purpose, a well-known method of trilateration may be used. If a given RSU device has access to the information about its own location in global coordinate system (GCS) and shares this information with the vehicle in the consecutive communication sessions, then the vehicle is able to estimate its location in the GCS as well. A method for finding the coordinates of the RSU in the GCS is described in EP 3 640 665 A1.

The distance between the OBU device 10 and the mounting position on the ground of a pole, upon which a given RSU device 20 is mounted may be determined as follows. As shown in Fig. 7, the OBU is mounted at a particular position of the vehicle (VEH); the particular position of the OBU is shown to be at a height $H_{OBU}$ above ground level of the road. The RSU 20 is mounted at a height $H_{RSU}$ above the ground level. For example, if the RSU is mounted at the top of a pole (e.g. a light pole) the height $H_{RSU}$ may be the pole height. In terms of the estimation of the location of the vehicle on the road, a key information is the planar distance $D_P$, instead of a direct distance $D_{L2}$ between the OBU and the RSU that can be mounted even more than 10 meters above the ground level (e.g. based on the class of the road). The distance L2 indicates here again a direct Euclidean distance, as discussed. Then, with a known value of the pole height ($H_{RSU}$) and the height of the mounting position of the OBU in the vehicle ($H_{OBU}$) the planar distance $D_P$ between the OBU 10 and the mounting position on the ground of a pole may be calculated, for example by using Pythagoras theorem based on:

$$D_P = \sqrt{D_{L2}^2 - \Delta H^2} \qquad (2)$$

where:

$$\Delta H = H_{RSU} - H_{OBU} \qquad (3)$$

is the difference height between the pole height ($H_{RSU}$) and the OBU height ($H_{RSU}$).

As single communication session is typically insufficient for a precise position estimation of the vehicle on the road, the OBU may repeat the communication session and may determine the planar distance between the OBU and the mounting position on the ground of a pole. Here, Fig. 7 shows the example of determining a first distance $D_{P,2}$ for a first communication session and determining a second distance $D_{P,1}$ for a second communication session. The skilled person understands that this is not limiting, and such a distance may be determined for more than two communication sessions.

The function of determining a precise planar distance may be used for controlling the vehicle to travel towards target positions along a virtual track. Such a control can be implemented by the RSU 20. This function may further be implemented in ADAS functions which provide assistance in passing junctions, roundabouts, and other intersections. These are critical nodes (mainly in cities) at which the safety issues are of a major concern. Using the techniques described herein, a vehicle, knowing its destination and an intended route to reach this destination may use V2I technology to obtain the set of precise intermediate points (virtual track) that will form its trajectory, for example, in the vicinity of junctions or roundabouts. In this way, the vehicle in which an OBU is mounted may be guided through such an intersection.

Another useful application of the above embodiments is in a hybrid communication system covering both private transport and public means of transport. The situation is especially important when commuting to larger cities from suburban areas, which a large proportion of people travel by train. However, it is not always possible to build a car park directly at the railway station, which creates an organizational problem. In such a situation, parking lots can be created at a certain distance from the train station and transport commuters from the parking lots to the station using autonomous vehicles. In this case, the transport would take place over relatively short distances, additionally at a limited speed. Autonomous vehicles that would take part in such transport could in this case move along strictly delineated routes according to the determined virtual tracks, appropriately equipped with RSU-V2I sensors, which would precisely define the position of these vehicles on a given road section.

In order to create the virtual track for supporting the control of autonomous vehicles on the road, the present disclosure also teaches embodiments of mounting the RSU devices in the V2I road infrastructure, e.g. in elements of urban lighting infrastructure, such as is available in almost all types of communication routes. In particular, the present disclosure proposes the installation of the RSU devices in streetlamps/streetlights or on other infrastructure posts along a road, available practically everywhere in cities and in urbanized areas. This allows to reduce the costs of creating, assembling and maintaining the system based on the V2I technology.

The RSU devices may be deployed, for example, in streetlamps or streetlights in a vicinity of intersections or roundabouts to support ADAS functions responsible for controlling the movement of autonomous vehicles through these specific road places, in particular by providing virtual tracks to an OBU of a vehicle.

V2I devices, such as RSU devices, can be mounted on poles with lighting lamps or streetlights on a given road section or in a specific area of the city. Typically, such poles are evenly distributed in the road space, preferably at equal distances to each other. This is due to a necessity to ensure even illumination of the road surface. Thanks to this, it is possible to obtain an even planar distribution of the V2I communication devices in a given area, and thus a possible standardization of the communication range and their internal structure. The same concerns the OBU devices, mounted in vehicles, that can be standardized when the conditions under which they operate are uniform.

The lighting poles may be mounted in an immediate vicinity of the road, so it is possible to obtain the conditions of direct LOS (line of sight) communication, which facilitates the determination of the direct distance between the RSU and the OBU, and the derivation of the planar distance therefrom, as described above.

Lighting poles typically have a standardized height on a given road section (selected category respectively), but also in larger areas of urbanized areas. This is also related to the aim of obtaining uniform light intensity and standardization of lamps installed in this area. The described ability of the standardization strongly supports the solutions described above. For example, it allows to save in an internal memory of the RSU devices the value of the height above the road surface, on which the devices are installed. This information may be recorded before its installation in the field, for a larger series of such devices installed in a given area. Such an approach allows for a further simplification of the installation procedure of the overall system. A constant and known height of the mounting point allows to calculate more easily the distance between the OBU mounted in the host vehicle and the base of the pole, at which the RSU device is mounted. The computation of this distance is the purpose of the proposed system, and the relevant quantity to accurately provide a virtual track control to the vehicle.

For example, standard lamp mounting heights on lighting poles may be as follows: (i) h = 10 - 15 m (motorways and expressways), (ii) h = 6 - 10 m (national and local roads), (iii) h = 6 - 7 m (residential roads inside cities).

According to a further embodiment, the RSU device may be mounted at a height in the lamp holder which means difficult access to the RSU for outsiders. This improves the security of the overall system. Additionally, the installation of the RSU devices inside the lamp holder or its integration with the holder provides an effective protection of the RSU device and it's internal elements (sensors and the like) against adverse weather conditions and the possibility of operating in conditions with much less variability than in the case of the installation with a direct exposure to external weather conditions.

According to a further embodiment, the RSU device may be mounted, inside the lamp holder, on a surface of a bulb or on a boundary between the holder and the exterior, for example with an outside terminal that allows to connect the RSU device with external solar power cell. The solar cell would be connected to the RSU device, for example by a cable. The installation of the RSU device inside the lamp holder enables easy access to a power supply and thus the RSU device can be easily supplied with electricity. This is a particular advantage for the installation and maintenance of the overall system.

The following describes preferred embodiments of mounting the RSU devices inside the lamp holder and their power supply:

According to a preferred embodiment, the RSU device (sensor) may be installed or integrated with a bulb or lamp, which is then mounted in the lamp holder as follows:

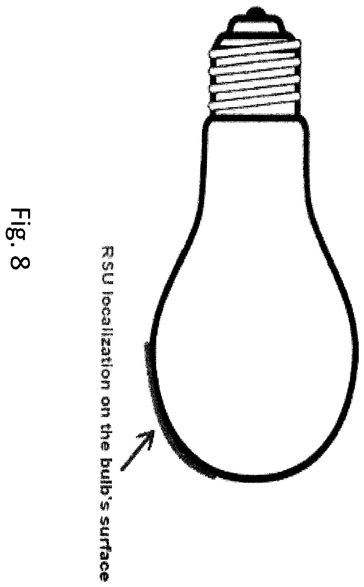

a) The RSU device may be installed on the surface of the bulb (e.g. a lamp such as an incandescent lamp), as illustrated in Fig. 8. In this case, the RSU device (sensor) may be sticked to the bulb with a power supply to the outer surface of the bulb. This sticking would be preferably in a position on the surface on which a sufficient or even the greatest heat exchange occurs between the bulb and its surroundings. As a result, the RSU device (sensor) can be powered by the heat generated by the bulb. This solution is advantageously simple, because it allows the integration of the RSU device with the already existing lighting installation in a given area of the road with bulbs already installed in the luminaires. Here, the RSU device (sensor) may be mounted using an applied adhesive layer that allows for sticking and detaching the RSU device (sensor). If it is necessary to replace the bulb or its socket, the RSU device (sensor) can then be easily detached and stuck to the newly replaced bulb.

b) The RSU device may also be integrated with the bulb (e.g. incandescent lamp) during the production or manufacture of the bulb itself. In this case, the RSU device (sensor) can be powered directly from the bulb's power supply. The RSU device may then be mounted in such a way that its antenna is located on the surface of the bulb. Such a configuration advantageously avoids the need for radio waves to pass through additional layers of material from which the bulb is made.

According to another preferred embodiment, the RSU device (sensor) may be installed or integrated with the lamp holder as follows:

a) The RSU device may be installed inside a lamp holder near its surface, in particular on a position where heat exchange takes place between the inside of the luminaire and the lamp surrounding. In this case, the RSU device can be powered through thermal conversion (e.g. using one or more Peltier cells and/or thermo-electronic generators). Here, a slice of the RSU device (sensor) may be placed on a light fitting or light bulb (for example, on highways and expressways, a luminaire with a power of 250 W - 600 W), from which the heat will come from (e.g. at night). A sufficient heat collection can take place through the adhesive layer (bottom) of the RSU device (sensor).

b) The RSU device may alternatively be integrated with the lamp socket during the production stage and uses the power supply system supplied by the lamp. The RSU device (sensor) can then be connected directly to the lamp power supply via wires.

Since typical streetlights are turned on during nights and during the dusks and downs, a further preferred embodiment is a RSU device having hybrid power supply. Here, one of the modes of the supply may be solar energy to be acquired during the days or little wind turbines mounted on the light poles.

The proposed solutions of virtual tracks based on the V2I technology can be used in such applications and systems, in which there is a high importance of precisely determining the position of the vehicle on the road in relation to particular lanes. These functions include, for example, Lane Departure Warning (LDW), Autonomous Emergency Breaking (AEB), Lateral Control (LC), Adaptive Cruise Control (ACC), Traffic Jam Assist (TJA), Traffic Sign Recognition (TSR), Intersection Assist (IA), etc.

An example of the application of the solutions proposed in this disclosure is its usage as a support of the algorithms related to Intersection Assist (IA) functions. The idea of such functions is to assist the host vehicle in crossing intersections and roundabouts. These points, especially in the cities, are critical from the point of view of the vehicle safety. The problem is that intersections and roundabouts may be very complex and thus challenging for the autonomous vehicles. Using the solution proposed in this disclosure I, the vehicle, knowing its destination and having a designated route in the city necessary to achieve it, can, based on V2I technology, obtain a precise set of intermediate, time-dependent points of the trajectory within individual intersections or roundabouts. Thanks to this, the autonomous vehicle can be passed through a given intersection.

Another possibility is to use the proposed solution in a hybrid communication system covering both private transport and public means of transport. The situation is especially important when commuting to larger cities from suburban areas, where a large proportion of people travel by train. However, it is not always possible to build a car park directly at the railway station, which creates an infrastructure problem. One possible solution to this problem is to create parking lots at a certain distance from the train station and transport travellers from them to the station using autonomous vehicles. In this case, the travel would take place over relatively short distances, additionally at a limited speed. Autonomous vehicles that would take part in such transport could in this case move along strictly delineated routes, appropriately equipped with V2I sensors (RSU - Road Side Unit), which would precisely define the position of these vehicles on a given road section. Similarly, the passengers at the airport could be quickly transported by such autonomous vehicles from a plane to a terminal or from a terminal to a train station which is sometimes located far from the airport building (e.g. at Düsseldorf International Airport).

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way. It is also to be understood that any procedures recited in the claims need not be performed in the order presented.

While this specification contains many specific embodiment details, these should not be construed as limitations on the scope of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

**Claims**

1. A method performed by an onboard unit of a vehicle, the method comprising:
   for each of a plurality of vehicle positions on a road

   - determining a direct distance between the vehicle position and a position of a roadside unit; and
   - determining, based on the determined direct distance, a planar distance between the vehicle position in a horizontal plane containing the vehicle position and a projection of a position of the roadside unit onto a plane of the road, the determining of the planar distance being based on a height of the roadside unit relative to a ground level of the road.

2. The method of claim 1, wherein, for each of the plurality of vehicle positions, the direct distance is determined by:

   - transmitting a first electromagnetic signal from the onboard unit, the first electromagnetic signal having first data including an identification value of the onboard unit device;
   - receiving a second electromagnetic signal, the second electromagnetic signal having second data message including an identification value of the roadside unit and the identification value of the onboard unit device.

3. The method of claim 2, wherein the second electromagnetic signal is a signal transmitted by the roadside unit after a delay time of a predetermined amount of time.

4. The method of any of claims 1 - 3, further comprising:
   determining a position of the vehicle relative to the position of the roadside unit based on the respective direct distances determined for each of at least two different positions of the onboard unit.

5. The method of claim 4, further comprising:

   transmitting a third electromagnetic signal to the roadside unit, the third electromagnetic signal having third data including indicating the position of the vehicle and at least a local part of an intended route of the vehicle; and receiving a fourth electromagnetic signal from the roadside unit, the fourth electromagnetic signal having fourth data including a virtual track for the vehicle.

6. The method of claim 5, further comprising:
   using the virtual track in controlling a movement of the vehicle.

7. A method performed by a roadside unit, the method comprising, for each of a plurality of vehicle positions of a vehicle in a region defined relative to the roadside unit:

   - receiving a first electromagnetic signal from an onboard unit of the vehicle, the first electromagnetic signal having first data including an identification value of the onboard unit device;
   - transmitting a second electromagnetic signal, the second electromagnetic signal having second data message including an identification value of the roadside unit and the identification value of the onboard unit device.

8. The method of claim 7, wherein the second electromagnetic signal is transmitted after a delay time of a predetermined amount of time.

9. The method of any of claims 7 - 8, further comprising:

   - receiving a third electromagnetic signal from the roadside unit, the third electromagnetic signal having third data including indicating a position of the vehicle and at least a local part of an intended route of the vehicle; and
   - transmitting a fourth electromagnetic signal to the roadside unit, the fourth electromagnetic signal having fourth data including a virtual track for the vehicle.

10. An onboard unit comprising a transmitting/receiving section, a control section, and a memory section, wherein the control section is configured to control the onboard unit to perform a method in accordance with any of claims 1 - 6.

11. A roadside unit comprising a transmitting/receiving section, a control section, and a memory section, wherein the control section is configured to control the onboard unit to perform a method in accordance with any of claims 7 - 9.

12. The roadside unit of claim 11, adapted to be mounted in a road infrastructure post or pole.

13. The roadside unit of claim 11, adapted to be mounted in a lamp holder of a road infrastructure post or pole.

14. The roadside unit of claim 11, adapted to be mounted on a surface of a bulb for lamp of a road infrastructure post or pole.

15. The roadside unit of claim 11, adapted to be mounted on a boundary between a lamp holder and exterior of the lamp holder of a road infrastructure post or pole.

Fig. 1

Fig. 2

For each of a plurality of vehicle positions on a road:

Determine a direct distance between the vehicle position and a position of a roadside unit ～ S42

Determine, based on the determined direct distance, a planar distance of the vehicle ～ S44

Fig. 3

Fig. 4

Fig. 5

Fig. 6

Fig. 7

Fig. 8

RSU localization on the bulb's surface

* title page ...

Europäisches
Patentamt

European
Patent Office

Office européen
des brevets

# EUROPEAN SEARCH REPORT

**Application Number**

EP 21 20 4218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 825 714 A2 (BEIJING BAIDU NETCOM SCI & TEC [CN]) 26 May 2021 (2021-05-26) * figure 3 * | 1-15 | INV. G01C21/26 |
| A | CN 105 118 098 A (SHENZHEN GENVICT TECH CO LTD) 2 December 2015 (2015-12-02) * paragraph [0049] * | 2-4,7,8, 11 | |
| A | US 2019/251847 A1 (WU NAN [CN]) 15 August 2019 (2019-08-15) * paragraphs [0027], [0059], [0060], [0083], [0084] * | 2-4,7,8, 11 | |
| X | EP 3 352 486 A1 (NEC CORP [JP]) 25 July 2018 (2018-07-25) | 7-9, 11-15 | |
| A | * paragraphs [0024] – [0026], [0040] – [0042]; figure 1 * | 5,6 | |

| | |
|---|---|
| | TECHNICAL FIELDS SEARCHED (IPC) |
| | G01C |

The present search report has been drawn up for all claims

| Place of search | Date of completion of the search | Examiner |
|---|---|---|
| The Hague | 5 April 2022 | Kuhn, Robert |

EPO FORM 1503 03.82 (P04C01)

## ANNEX TO THE EUROPEAN SEARCH REPORT
## ON EUROPEAN PATENT APPLICATION NO.

EP 21 20 4218

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2022

| Patent document cited in search report | | | Publication date | Patent family member(s) | | | Publication date |
|---|---|---|---|---|---|---|---|
| EP | 3825714 | A2 | 26-05-2021 | CN | 112050819 | A | 08-12-2020 |
| | | | | EP | 3825714 | A2 | 26-05-2021 |
| | | | | JP | 2021179440 | A | 18-11-2021 |
| | | | | KR | 20210040303 | A | 13-04-2021 |
| | | | | US | 2021231461 | A1 | 29-07-2021 |
| CN | 105118098 | A | 02-12-2015 | NONE | | | |
| US | 2019251847 | A1 | 15-08-2019 | CN | 110164166 | A | 23-08-2019 |
| | | | | US | 2019251847 | A1 | 15-08-2019 |
| EP | 3352486 | A1 | 25-07-2018 | EP | 3352486 | A1 | 25-07-2018 |
| | | | | JP | 6812979 | B2 | 13-01-2021 |
| | | | | JP | 2021048638 | A | 25-03-2021 |
| | | | | JP | WO2017046979 | A1 | 05-07-2018 |
| | | | | US | 2019028862 | A1 | 24-01-2019 |
| | | | | US | 2020169838 | A1 | 28-05-2020 |
| | | | | WO | 2017046979 | A1 | 23-03-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170071207 A

- EP 3640665 A1

**Non-patent literature cited in the description**

- **BUTAKOV et al.** Personalized Driver Assistance for Signalized Intersections Using V2I Communication. *IEEE Transactions on Intelligent Transportation Systems,* July 2016, vol. 17 (7), 1910-1919
- **OLAVERRI-MONREAL et al.** Implementation and Evaluation of a Traffic Light Assistance System Based on V2I Communication in a Simulation Framework. *Journal of Advanced Transportation,* vol. 2018
- **WANG et al.** A Tightly-Coupled GPS/INS/UWB Cooperative Positioning Sensors System Supported by V2I Communication. *Sensors,* 2016, vol. 16 (7), 944
- Messaging capabilities of V2I networks. **RAZVAN et al.** Procedia Manufacturing. Elsevier, 2018, vol. 22, 476-484
- **AMINI et al.** Improving GPS-Based Vehicle Positioning for Intelligent Transportation Systems. *IEEE Intelligent Vehicles Symposium (IV), Electronic,* 2014

- **FASCISTA et al.** A Localization Algorithm Based on V2I Communications and AOA Estimation. *IEEE Signal Processing Letters,* 2017, vol. 24 (1
- **MARTYNENKO et al.** Implementation and Evaluation of a Two-Way-Ranging Module based on an IR-UWB Chip-Set. *12th Workshop on Positioning, Navigation and Communication (WPNC'15), Germany,* 2015
- **HASSAN et al.** Vehicle Localization System based on IR-UWB for V2I Applications. *8th International Conference on Computer Engineering & Systems (ICCES),* 26 November 2013
- **LLORENTE et al.** UWB technology for safety-oriented vehicular communications. *Proc. SPIE 9807, Optical Technologies for Telecommunications,* 2015, 980705
- **BANACH et al.** Real-time Locating Systems for Smart City and Intelligent Transportation Applications. *30th International Conference on Microelectronics (MIEL), Nis, Serbia,* 231-234